# EUROPEAN PATENT APPLICATION

(11) **EP 2 282 226 A1**
(43) Date of publication of application: **09.02.2011**
(21) Application number: 10005720.7
(22) Date of filing: 02.06.2010
(51) Int. Cl.: G02B 3/14, G02B 26/02

(54) **Adjustable optical diaphragm**

(71) Applicant: Optotune AG, 8600 Dübendorf (CH)
(72) Inventor: Aschwanden, Manuel, 8046 Zürich (CH); Blum, Mark, 6330 Cham (CH); Niederer, David, 5024 Küttigen (CH)
(74) Representative: Toleti, Martin

(57) **Abstract**

This disclosure includes an adjustable optical diaphragm comprising a membrane (103, 203, 303, 403, 503) with an interior (1031) and a periphery (1032), a support (101, 201, 301, 401, 501) for the membrane, an opaque fluid (102, 202, 302, 402, 502) between the membrane and the support, and an actuator for deforming the membrane. The actuator solely engages with the periphery of the membrane by that bringing the interior of the membrane in and out of contact with the support and consequently forming an adjustable aperture by allowing light (108, 208, 308, 408, 508) to pass the region where the membrane is in contact with the support.

## Description

### Technical Field

The invention relates to an adjustable optical diaphragm, as well as to methods for operating and fabricating such a device.

### Background Art

An optical diaphragm is an optical device which is used to define an optical area through which light can pass through. An optical diaphragm may also be named as optical aperture.

A variety of optical diaphragms have been known.

The simplest version of an optical diaphragm is a non-adjustable diaphragm made of black PET or anodized aluminium. Such aperture is basically represented by a black sheet with a normally circular hole in the centre.

For increased functionality, a variety of optical diaphragms with adjustable hole diameter have be described. WO 2005/119307 A1 discloses an optical element comprising a fluid chamber and a device for providing a magnetic field over at least a portion of the fluid chamber. The fluid chamber has side portions, and contains a first fluid and a second fluid. The fluids are non-miscible and the second fluid is capable of being influenced by a magnetic field.

Moreover, the adjustable liquid optical diaphragm of WO 2007/068761 A1 uses two immiscible liquids which are movable with respect to one another by an electro-wetting phenomenon under an applied voltage. The first liquid is substantially opaque and the second liquid is substantially transparent. By moving the liquids with respect to each other the size of the light transparent region can be adjusted by means of the applied electrical voltage.

Furthermore, other continuously variable apertures have been developed, in which tens of steel blades are linked by sliding rotary mechanics and can be driven to form a variable polygon aperture, which is used to approach a circular one. Although this type of iris diaphragm has wide potential use in photography, its complicated structure and the high cost associated limit its miniaturization capability.

In "Optofluidic variable aperture" by Yu Hongbin et al., Optics Letters, Vol. 33, No. 6, March 15 2008, there is disclosed a variable aperture comprising a deformable membrane, an air pressure chamber, a cavity filled with a light-absorbing liquid, and a rigid transparent upper plate. The contact area between the membrane and the cavity can be controlled by varying the air volume introduced. Hence, the device can serve as light transmission aperture.

Unfortunately, in such device the air pressure chamber is arranged next to the membrane below the cavity filled with the liquid. This means, the air pressure chamber is directly arranged in the transmission path for the light passing the device. Consequently, a couple of additional interfaces need to be crossed by the light when passing the device. Any additional interface may be the reason for scattering, absorption or other undesired effects.

### Disclosure of the Invention

The problem to be solved by the present invention is therefore to provide an optical diaphragm in which the light passing does not interfere with means for adjusting the aperture.

This problem is solved by an adjustable optical diaphragm as claimed in claim 1.

According to a first aspect of the present invention there is provided an adjustable optical diaphragm comprising a membrane with an interior and a periphery, a support for the membrane, a fluid between the membrane and the support, and an actuator for deforming the membrane. The actuator is arranged such that it solely engages with the periphery of the membrane for effecting bringing the interior of the membrane in and out of contact with the support.

As a result, elements belonging to the actuator do not need to be arranged in the transmission path of the light. Any actuator means for adjusting the aperture is arranged lateral to the interior portion of the membrane and interacts with the periphery portion of the membrane only. Designing and arranging the actuator such that it solely engages with the periphery of the membrane but not with the interior which constitutes the light transmission path helps in preventing from undesired scattering or absorbing effects.

In a preferred embodiment, the actuator is designed for moving the periphery of the membrane towards the support by such movement effecting a moving of the interior of the membrane away from the support through fluid based pressure coupling. And vice versa, the actuator advantageously is designed for moving the periphery of the membrane away from the support by such movement effecting a moving of the interior of the membrane towards the support. Unlike in the art the present actuator is not acting on the interior of the membrane for pushing it towards the support. Instead, the present actuator engages with the periphery of the membrane solely and by such engagement indirectly controls the movement of the interior of the membrane through fluid based pressure coupling and the fact of having a constant fluid volume for defining the aperture.

Interestingly, the actuation direction applied to the periphery is contrary to the actuation direction applied to the interior according to the art. While in the art the actuation direction coincides with the movement of the membrane with respect to the support, in the present embodiment the direction of the actuation of the periphery with respect to the support is opposite to the desired movement of the interior of the membrane with respect to the support: Whenever the interior of the membrane shall be moved towards the support for displacing the fluid from a contact area between the interior and the support, the periphery of the membrane is moved in the opposite direction, i.e. away from the support, such movement being effected by suitable actuating means. And vice versa, whenever the interior shall be moved away from the support for allowing a reflow of the fluid into the centre of the aperture, by this closing the aperture, the periphery is moved in the opposite direction, i.e. towards the support, again, effected by suitable actuating means.

According to another aspect of the present invention, there is provided a method for operating an optical diaphragm, the diaphragm comprising a membrane with an interior and a periphery, a support for the membrane, and a fluid between the membrane and the support. The periphery of the membrane is moved towards the support for effecting a moving of the interior of the membrane away from the support. And vice versa, the periphery of the membrane is moved away from the support for effecting a moving of the interior of the membrane towards the support.

According to a further aspect of the present invention there is provided a method for fabricating an adjustable optical diaphragm. The method comprises filling a fluid into a support, attaching a membrane with an interior and a periphery to the support, and providing an actuator and engaging the actuator solely with the periphery of the membrane for deforming the membrane.

Other advantageous embodiments are listed in the dependent claims as well as in the description below. The described embodiments similarly pertain to the apparatus and the methods. Synergetic effects may arise from different combinations of the embodiments although they might not be described in detail.

Further on it shall be noted that all embodiments of the present invention concerning a method might be carried out with the order of the steps as described, nevertheless this has not to be the only essential order of the steps of the method all different orders of orders and combinations of the method steps are herewith described.

### Brief Description of the Drawings

The aspects defined above and further aspects, features and advantages of the present invention can also be derived from the examples of embodiments to be described hereinafter and are explained with reference to examples of embodiments. The invention will be described in more detail hereinafter with reference of examples of embodiments but to which the invention is not limited. Such description makes reference to the annexed drawings, wherein:
Fig. 1a and 1b show two states of an adjustable optical diaphragm according to an embodiment of the present invention, schematically illustrated in a sectional view,
Fig. 2a and 2b show two states of an adjustable optical diaphragm according to another embodiment of the present invention, schematically illustrated in a sectional view,
Fig. 3a and 3b show two states of an adjustable optical diaphragm according to a third embodiment of the present invention, schematically illustrated in a sectional view,
Fig. 4a and 4b show two states of an adjustable optical diaphragm according to a fourth embodiment of the present invention, schematically illustrated in a sectional view,
Fig. 5a and 5b show two states of an adjustable optical diaphragm according to a fifth embodiment of the present invention, schematically illustrated in a sectional view.

### Modes for Carrying Out the Invention Definitions

The term "axial" is generally used to designate a direction perpendicular to the surface of the membrane and generally parallel to the direction of the light path. For the reason that the membrane in the present application often takes a buckled shape it is assumed that the term axial may also refer to an assumed plain shape of the overall optical diaphragm, most of the times coinciding with a plain surface of the support, and therefore be defined as a direction perpendicular to such surface. The term "lateral" is used to designate a direction perpendicular to the axial direction, i.e. a direction parallel to the support.

The terms "interior" and "periphery" both refer to portions of the membrane. While the membrane in a relaxed, non-stressed state typically is a plain element of e.g. triangular, rectangular, circular or polygonial shape, such membrane always provides for an inner portion and a periphery portion. Both portions complement each other. The periphery portion surrounds the interior portion. E.g., if the basic shape of the membrane is a circle, the membrane may be divided into the interior taking the form of a circle, and the periphery taking the form of an annulus surrounding the interior. The two portions of the membrane do not necessarily need to form a single piece membrane. In contrast, the membrane may be formed by two individual pieces separated from each other, i.e. the interior piece and the periphery piece are two separate pieces - which advantageously are axially offset with respect to each other. In a lateral dimension, the periphery portion still surrounds the interior portion. Specifically, the two pieces may still fully complement each other, i.e. build a continuous overall membrane when virtually being aligned to the same position on that axis.

A preferred embodiment of the present invention relates to a tunable optical diaphragm comprising an opaque fluid with a constant volume enclosed by a deformable polymer film, also referred as deformable membrane, and a rigid support in combination building a container for the fluid. The deformation of the polymer film is achieved by using, for example, an electrostatic zipper actuator, a piezo actuator, a piezo motor, a stepper motor, a screw drive motor, an electroactive polymer actuator, or an electrostatic actuator including comb drives or other MEMS actuators. An electromagentic actuator comprising at least one of a magnet, a coil, and magnetically soft material may be used as well. Alternatively, a mechanical ring may be axially moved, which is interconnected to the deformable membrane. Any actuator means engage with the membrane at a periphery portion of the membrane. The axial movement of the membrane can be based on electromagnetic or electrostatic actuation or on a mechanical actuation which in turn may be triggered by a manual actuation of, e.g., a linking structure connected to the periphery. Starting in a position where the periphery of the membrane is held in a lower position by the actuator, an axial movement of the periphery of the membrane away from the support results in a lateral displacement of the opaque fluid from the interior of the container to its periphery. In turn, an axial movement towards the support of the periphery of the membrane results in a lateral displacement of the opaque fluid from the periphery of the container to its interior. In the region, where there is no opaque fluid between the support and the deformable film, light can pass through. In the region, where opaque fluid is left, light is absorbed. The diameter of the transparent region, i.e. the region of the interior of the membrane being in contact with the support, can be adjusted by changing the electrical or mechanical signal applied to the actuator.

The fluid can be a liquid or a gas. The fluid not necessarily needs to show fully opaque properties. The fluid may show an at least partly scattering or absorbing property, advantageously at least for one wavelength.

The membrane may advantageously be embodied as a pre-stretched membrane, i.e. a membrane exhibiting tensile stress, and in particular as a polymer film. Advantageously, the membrane is optically transparent. The support may be embodied as a rigid and at least partially transparent support. The support may consist of one or multiple parts.

The actuator may be embodied as electrically or mechanically controlled actuator, capable of deforming the advantageously pre-stretched membrane. The device is configured such that, when a signal is applied to the actuator, the membrane is moved with respect to the support in its periphery by this causing a deformation of the membrane in its interior portion such that the interior of the membrane moves towards/away from the transparent support and pushes the opaque fluid out from/into the centre of the container. If the membrane deformation is strong enough, the membrane and the support touch and an optically transparent section builds up or is closed respectively. The deformation of the membrane can be caused by electrostatic forces, piezoelectric actuators, electromagnetic actuators, electroactive polymers or a manually induced deformation.

Since the tunable diaphragm comprises only one fluid instead of two fluids as described in the art, diaphragm apertures of more than 5mm are achievable without requiring density matched fluids. Furthermore, the device can be built very compact and achieve a continuous variation of the aperture size. Additionally, it comprises only a small amount of parts, making it very cost efficient in production.

The adjustable diaphragm can thus be used for applications ranging from F-number changing cameras in mobile phones, digital cameras, surveillance cameras, lighting systems and many other optical systems, with the F-number known in optics as focal length per diameter of the aperture.

In an advantageous embodiment, the support of the adjustable diaphragm is made of a plastic, glass, metals, or the combination of those. Such materials have characteristics that lead to a good optical quality with simple manufacturing processes.

Advantageously, the membrane has a thickness larger than 100 nm and/or smaller than 5 mm. While the lower boundary provides for ease in manufacturing, the upper boundary may be a limit where forces needed for deformation become difficult to be achieved.

In an advantageous embodiment, the membrane is made of polymers (e.g. PDMS Sylgard 186 by Dow Corning^{™} or Optical Gel OG-1001 by Litway^{™}) or acrylic dielectric elastomers. Such materials allow a substantial deformation so that the diameter of the diaphragm can be changed by a large amount.

In a very compact embodiment, the polymer film is deformed through electrostatic forces. A first ring-shaped flexible electrode is applied onto or integrated into the periphery of the polymer film membrane. A second ring-shaped electrode is put at the periphery of the support where the support meets the membrane. In between the first and the second ring-shaped electrodes there is provided a thin insulation layer for decoupling the second electrode from the first electrode. The electrodes in combination with the insulator build a zipper actuator. Such zipper actuator may be an element manufactured separate from the rest of the diaphragm, and attached to the membrane during fabrication. When an electrical voltage is applied between the flexible first electrode and the rigid second electrode, electrostatic forces build up and the flexible electrode is attracted towards the second electrode. The deformation of the flexible electrode causes a deformation of the membrane and thus a displacement of the fluid in the container. The displacement of the fluid from the centre of the container to its periphery results in a change of the diameter of a region in the middle of the container in which section no fluid is present between the support and the membrane, in particular the interior of the membrane. Therefore, the diameter of the optically transparent region is changing.

In an alternative embodiment, the membrane is deformed by the perpendicular movement of a rigid element in form of a ring which is interconnected to the periphery of the polymer film membrane. The axial movement of the rigid ring can be achieved by electromagnetic, electrostatic or manual actuation. In case of usage of electromagnetic actuation, the rigid ring can be interconnected to a magnet, a coil or a magnetically soft structure. If the rigid element is a magnet, the magnet interacts with a magnetic field generating structure, preferably a coil interconnected to the fluid container. The interaction results in an axial displacement of the magnet and thus an axial displacement of the rigid element. Alternatively, the magnets can be fixed on the support and interact with a moving coil, which is interconnected to the rigid element. In another embodiment, the rigid element comprises a magnetically soft material which can interact with a magnetic field, causing a displacement of the magnetically soft structure and thus a deformation of the polymer film membrane.

In another embodiment, the rigid element is displaced by a piezo motor, which is directly connected to the rigid element or coupled via mechanical linkage structure. A piezo motor is defined as a motor comprising a piezo actuator and an element which is moved by the piezo actuator.

Alternatively, the polymer film membrane can also be deformed by electroactive polymer actuators. Examples of electroactive polymer actuator materials are: dielectric elastomers, electrostrictive relaxor ferroelectric polymers, piezoelectric polymers (PVDF), liquid crystal elastomers (thermal), ionic polymer-metal composites, mechano-chemical polymers/gels.

Alternatively, the rigid element can be moved directly or via mechanical linkage structure by a stepper motor or a screw motor.

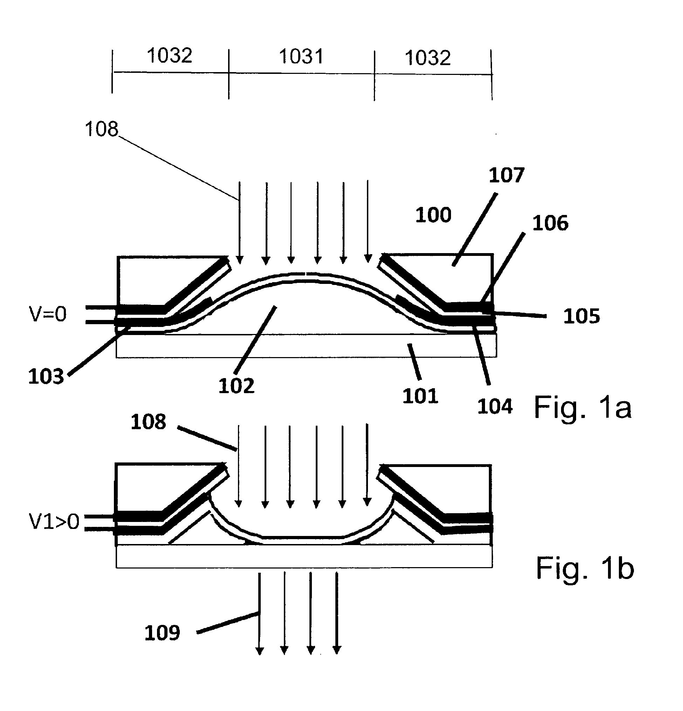

Figure 1 shows two states of an adjustable optical diaphragm according to an embodiment of the present invention, schematically illustrated in a sectional view. An opaque fluid 102 is enclosed in between a rigid support 101 and a deformable membrane 103. The deformable membrane 103 is advantageously made of elastomers such as silicon rubber, acrylic dielectric elastomer, duroplastic elastomers, thermoplastic elastomers or polyurethane. The deformable membrane 103 may be fixed directly or indirectly to the support 101 be means of adhesive, clamping or welding. The deformable membrane 103 preferably is pre-stretched.

At the very top of Fig. 1a there is an illustration of the different portions of the membrane 103: Portion 1031 denotes the interior portion of the membrane 103, and portion 1032 denotes the periphery portion of the membrane 103.

A first deformable electrode 104 is interconnected to the deformable membrane 103, in particular to the periphery portion 1032 of the membrane 103. The first electrode 104 directly is attached to the membrane 103. A second rigid electrode 106 is part of a rigid frame structure 107 and insulated by a thin insulation layer 105 versus the first electrode 104. The frame structure 107 including the second electrode 106 and the insulation layer 105 is located on top of the container comprising the fluid 102. The frame structure 107 comprises a central opening (i.e. a hole or an optically transparent material glass) for exposing the interior of the membrane 103 to light 108 entering the device as indicated by arrows. A sloped portion of the frame structure 107 includes at least a part of the second electrode 106 facing at least a part of the first electrode 104. The electrodes 104 and 106 interact and build a zipper actuator. When a voltage V is applied to the electrodes 104 and 106, the flexible electrode 104 and the rigid electrode 106 attract each other due to Coulomb forces.

Figure 1a illustrates the optical diaphragm in a state where no voltage V=0 is applied to the electrodes 104 and 106. The membrane 103 builds a buckling at least in its interior region due to the quantity of fluid being inserted between the membrane 103 and the support 101 exceeding the quantity allowing the membrane 103 to rest in a flat state. In the state as depicted in Fig. 1a, the light is absorbed by the opaque fluid 102 covering the entire support 101.

Figure 1b in turn illustrates the optical diaphragm in a state where a voltage V=V1>0 is applied to the electrodes 104 and 106, i.e. a voltage difference V#0 is applied between the electrodes 104 and 106. This results the first electrode 104 being attracted towards the stationary second electrode 106 by that lifting the periphery 1032 of the membrane 103 axially away from the support 101. This again results in a deformation of the deformable membrane 103 as shown in Figure 1b in which the interior of the membrane is pulled down towards the support 101. The reason for the membrane 103 taking such shape is that by lifting the periphery of the membrane 103 low pressure results in the bottom region of the container pulling down the membrane 103 towards the support 101 due to the constant volume of the fluid in the container. In turn, such motion of the membrane 103 causes a displacement of the opaque fluid 102 from the centre of the container to its periphery. When the deformation is strong enough, the membrane 103 touches the support 101, pushing all opaque fluid away from the centre and the incident light rays 108 can pass through the region where the membrane 103 is in touch with the support 101. Depending on the applied voltage the area and in particular its diameter through which light rays 109 can transmit varies.

In the present embodiment, the first electrode 104 preferably is deformable without being damaged. Advantageously, the first electrode 104 and possibly the second electrode 106 are therefore manufactured from one of the following materials:
- Carbon nanotubes (see "Self-clearable carbon nanotube electrodes for improved performance of dielectric elastomer actuators", Wei Yuan et al, Proc. SPIE, Vol. 6927, 69270P (2008));
- Carbon black (see "Low voltage, highly tunable diffraction grating based on dielectric elastomer actuators", M. Aschwanden et al., Proc. SPIE, Vol. 6524, 65241N(2007));
- Carbon grease / conducting greases;
- Metal ions (Au, Cu, Cr,....) (see "Mechanical properties of electroactive polymer microactuators with ion-implanted electrodes", S. Rosset et al., Proc. SPIE, Vol. 6524, 652410 (2007));
- Liquid metals (e.g. Galinstan);
- Metallic powders, in particular metallic nanoparticles (Gold, silver, copper);
- Metal films
- Conducting polymers (intrinsically conducting or composites);

The electrodes 104 and 106 may be deposited by means of any of the following techniques:
- Spraying;
- Ion-implantation (see "Mechanical properties of electroactive polymer microactuators with ion-implanted electrodes", S. Rosset, Proc. SPIE, Vol. 6524, 652410 (2007));
- PVD, CVD;
- Evaporation;
- Sputtering;
- Photolithography;
- Printing, in particular contact printing, inkjet printing, laser printing, and screen printing;
- Field-guided self-assembly (see e.g. "Local surface charges direct the deposition of carbon nanotubes and fullerenes into nanoscale patterns", L. Seemann, A. Stemmer, and N. Naujoks, Nano Letters 7, 10, 3007-3012, 2007);
- Brushing;
- Electrode plating;

Optionally, the support 101 can contain optical elements with suitable shapes e.g. be:
- Spherical lenses (convex and concave);
- Fresenel lenses;
- Cylindrical lenses;
- Aspherical lenses (convex and concave);
- Flat;
- Mirrors;
- Squares, triangles, lines or pyramids;
- Any micro- (e.g. micro lens array, diffraction grating, hologram) or nano- (e.g. antireflection

coating) structure can be integrated into the support 101 and the deformable membrane 103. When an anti-reflective layer is applied to at least one surface of the deformable membrane 103, it is advantageously formed by fine structures having a size smaller than the wavelength of the transmitted light. Typically, this size may be smaller than 5 µm for infrared applications, smaller than 1 µm for near-infrared applications, and smaller than 200 nm for applications using visible light.

Any of the following methods can e.g. be used to form the anti-reflection coating:
- Casting, in particular injection molding / mold processing;
- Nano-imprinting, e.g. by hot embossing nanometer-sized structures;
- Etching (e.g. chemical or plasma);
- Sputtering;
- Hot embossing;
- Soft lithography (i.e. casting a polymer onto a pre-shaped substrate);
- Chemical self-assembly (see e.g. "Surface tension-powered self-assembly of microstructures - the state-of-the-art", R.R.A. Syms, E. M. Yeatman, V.M. Bright, G.M. Whitesides, Journal of Microelectro-mechanical Systems 12(4), 2003, pp. 387 - 417);
- Electro-magnetic field guided pattern forming (see e.g. "Electro-magnetic field guided pattern forming", L. Seemann, A. Stemmer, and N. Naujoks, Nano Lett., 7 (10), 3007 - 3012, 2007. 10.1021/n10713373).

The material for the support 101 can e.g. comprise or consist of:
- PMMA;
- Glass;
- PS;
- Plastic;
- Polymer;
- Crystalline material, in particular single crystal material.
- Metals

Any of the following methods can e.g. be applied for forming and structuring the support 101:
- Grinding;
- Injection molding;
- Milling;
- Polishing;
- Casting.

The material for the opaque fluid 102 can e.g. comprise or consist of:
- Oils;
- Solvents;
- Ionic liquids;
- Particle filled fluids.

The material for the deformable membrane 103 can e.g. comprise or consist of:
- Gels (Optical Gel OG-1001 by Liteway^{™}),
- Elastomers (TPE, LCE, Silicones e.g. PDMS Sylgard 186, Acrylics, Urethanes);
- Thermoplast (ABS, PA, PC, PMMA, PET, PE, PP, PS, PVC,...);
- Duroplast.

The geometries of the electrodes 104, 106 can be round, square or any other appropriate form. The geometry of the membrane 103 and/or the support 101 can be round, square or any other appropriate form.

The membrane 103, and/or the support 101 may show hydrophobic property at least at the surfaces oriented towards the fluid. Such property may support bringing the membrane 103 into contact with the support 101 when needed. A hydrophobic coating may be applied to such surface, alternatively. Alternatively, the membrane and the support may be hydrophilic while the fluid is hydrophobic.

All the above alternatives may apply to the embodiments described in the following, too, where appropriate.

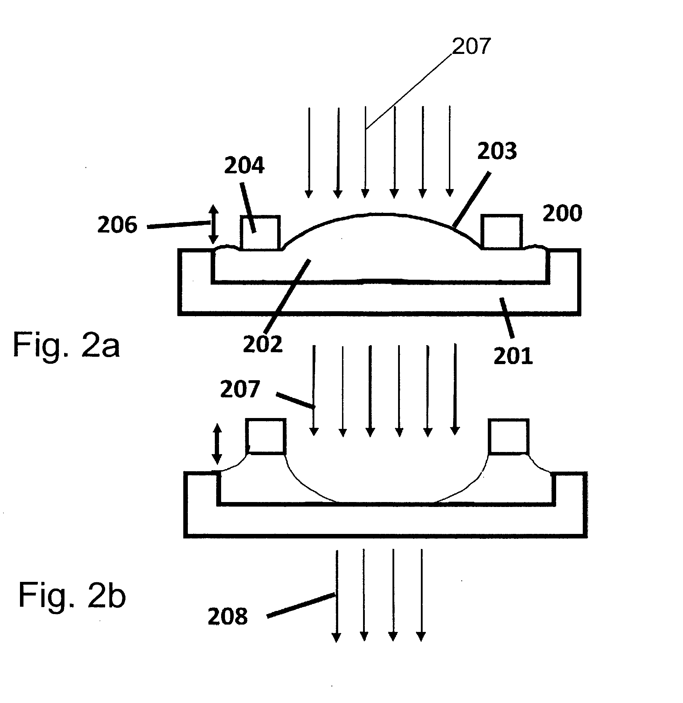

Figure 2a and 2b show an alternative implementation of an adjustable diaphragm in a relaxed and activated state, respectively.

Again, an opaque fluid 202 is enclosed in between a support 201 and a deformable membrane 203. A rigid element 204 - preferably a ring, but other shapes are also possible - is interconnected to the deformable membrane 203, e.g. fixed to the membrane by adhesion. This rigid element 204 can generally be displaced in axial direction 206 with respect to the support 201 as indicated by the arrow. This displacement - including lifting and/or lowering - can be achieved by using an electromagnetic motor comprising at least one or more of the following elements: coil, magnets, steal. Alternatively, the displacement can be achieved by using at least one or more of the following actuators: a stepper motor, a piezo motor, piezo actuators, screw drive motor, electroactive polymer actuator or an electrostatic actuator including comb drives or other MEMS actuators. Furthermore, the displacement of the rigid element 204 can also be achieved by manually moving the rigid element 204 with respect to the support 201 using for example a screwing mechanism. The actuators can directly be integrated into the rigid element 204 or the container 201 or be interconnected via mechanical linkage structure. The materials and production processes for the fluid 202, support 201 and deformable membrane 203 described in this embodiment, may be the same as described for the embodiment referred to in Fig. 1.

Figure 2a illustrates the optical diaphragm in a state where the rigid element 204 is in its lowest position with respect to the support 201. The membrane 203 builds a buckling at least in its interior region due to the quantity of fluid being inserted between the membrane 203 and the support 201 exceeding the quantity allowing the membrane 203 to rest in a flat state. In the state depicted in Fig. 2a the light 207 is absorbed by the opaque fluid 202 covering the entire support 201.

Figure 2b in turn illustrates the optical diaphragm in a state after the rigid element 204 has been lifted. The substantially axial displacement of the rigid element 204 with respect to the support 201 results in lifting the periphery of the membrane 203 axially away from the support 201. This again results in a deformation of the deformable membrane 203 as shown in Figure 2b in which the interior of the membrane is pulled down towards the support 201. Again, the membrane 203 displaces the opaque fluid 202 from the centre of the container to its periphery. In the region, where the deformable membrane 203 and the support 201 are in contact, no opaque fluid 202 is in the optical path of the incident light 207 which passes through the aperture and leaves the optical diaphragm as light 208.

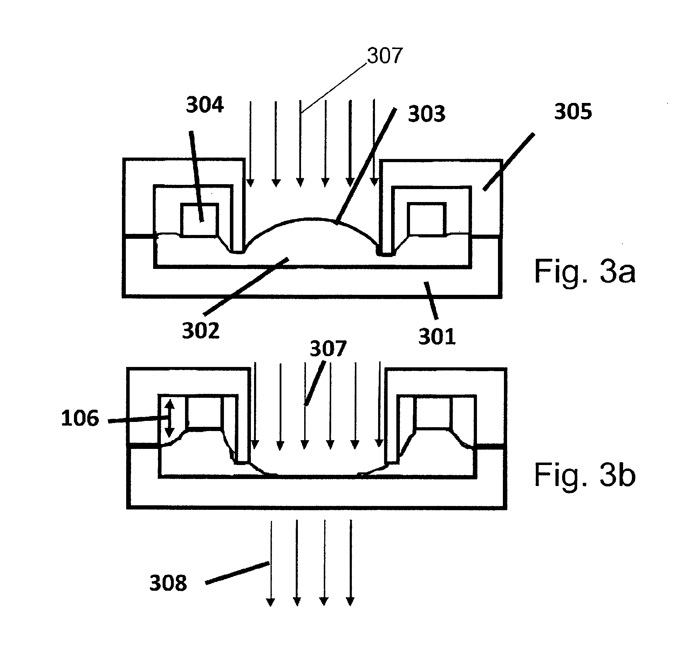

Figure 3 depicts another embodiment of the present invention in two states. This embodiment basically resembles the embodiment of Figure 2 except for a shaper element 305 introduced in Figure 3.

For miniaturized optical systems, it is highly important, that the optically transparent opening of the diaphragm is well centred with respect to the optical axis of an optical system the optical diaphragm may be integrated in. To achieve this, an additional membrane defining structure - also called shaper element 305 - is used to define the shape of the deformable membrane 303. This shaper element 305 can be referenced to a housing of an optical system utilizing the present optical diaphragm. Generally, the shaper element 305 shall limit a lateral extension of the buckling of the membrane 303 in particular in a state when the actuator effects the highest position of the periphery of the membrane 303. This helps positioning the aperture precisely with respect to an optical system since the rigid shaper element 305 is arranged at a defined position with respect to the optical system, in particular in a lateral direction. Without the usage of a shaper element 305 the interior of the membrane 303 may be deviated laterally impacting the transmission path. Advantageously, the shaper element 305 is arranged between the interior and the periphery of the membrane 303. The shaper element 305 can be applied in combination with all actuation principles including the zipper actuator embodiment. All other elements of this embodiment correspond to the elements described in Figure 2, however, with a different numbering introduced: 301 denotes the support, 302 denotes the fluid, 303 denotes the membrane, 304 denotes the rigid element, 307 denotes the incident light while 308 denotes the exiting light. In addition, the arrow denoted by 106 indicates the axial movement of the rigid element 304 which may be activated too. In the lifted position as shown in Fig. 3b, the shaper element 305 may also act as stopper for the movement of the rigid element 304. Preferably, the shaper element 305 is fixed to the support 301 and builds an enclosure for the rigid element 304 of the actuator. By such arrangement the actuator can be protected from exposure to the environmental. Preferably, the shaper element 305 is aligned with the form or the membrane 303, i.e. in case the membrane 303 takes the form of a circle, the shaper element 305 may take the form of an annulus.

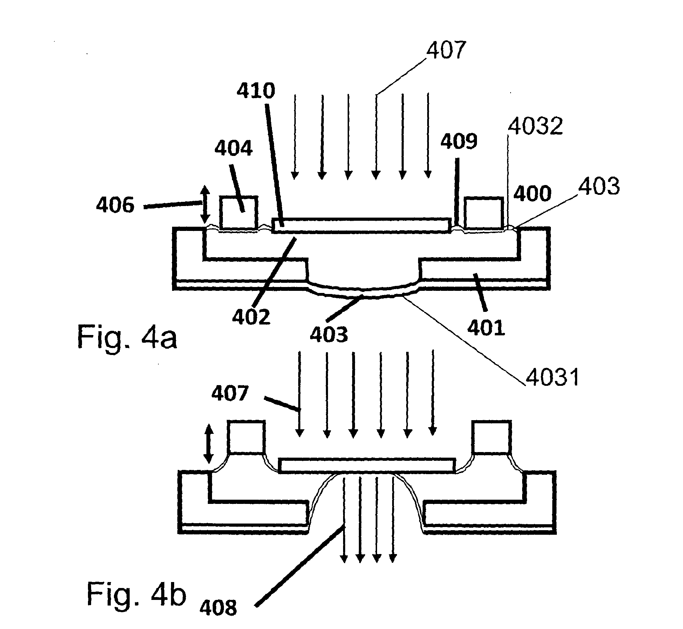

Figure 4 illustrates another embodiment of a diaphragm 400 according the present invention resembling the embodiment of Figure 2. However, the support is not built from a single piece of material but includes two pieces 401 and 410 enclosing the fluid 402 in between. The same is true for the membrane 403. Its interior 4031 and its periphery 4032 are separate, not interconnected pieces together forming the membrane function, and thus, forming the membrane. The two pieces 4031 and 4032 of the membrane 403 and the two pieces 401, 410 of the support together build the container holding the fluid 402. The first piece 401 of the support includes an opening in its middle covered by the interior portion 4031 of the membrane 403. The second piece 410 of the support, which is a transparent, flat plate is axially offset with respect to the first piece 401 such that light 407 may enter through the second piece 410 first, pass the fluid 402, and leave the diaphragm 400 through the interior 4031 of the membrane 403. The periphery 4032 of the membrane 403 is not only a piece separate from the interior 4031 of the membrane 403 but also is axially offset to it. The periphery 4032 is arranged between the second piece 410 and the first piece 401 of the support, by that surrounding the second piece 410. In other words, the membrane 403 is split in two portions, i.e. the interior 4031 and the periphery 4032, which two portions 4031, 4032 are axially offset and are arranged to build a container together with the two pieces 401 and 410 of the support. The principle of actuation is not changed. The periphery is actuated by means of the rigid element 404, again. By moving the periphery 4032 away from the first piece 401 of the support, the pressure distribution in the container results in pushing the interior 4031 of the membrane 403 towards the second piece 410 of the support, see Fig. 4b.

In an alternative embodiment, the periphery 4032 is arranged in or may even replace the side walls of the first piece 401 of the support by this building a ring-form actuator which effects moving the interior 4031 towards the second piece 410 of the support by pushing the periphery away from the support.

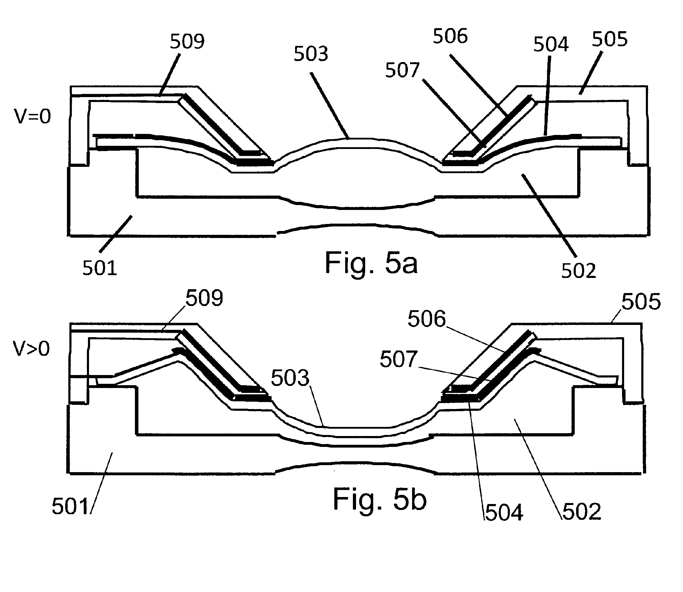

Figure 5 illustrates another embodiment of a diaphragm according the present invention. This embodiment again refers to an electrostatic actuation mode such as the embodiment depicted in Fig. 1. In addition to the support 501, the membrane 503, and the fluid 502 between the membrane 503 and the support 501, there is arranged a shaper element 505, again for shaping the membrane as described in connection with Figure 3. The shaper element 505 shapes the membrane 503 by means of its sloped portion pressing on the membrane 503 as depicted in Fig. 5a which shows the diaphragm in a state not allowing light to pass. The shaper element 505 further includes a second electrode 506 and an insulation layer 507 arranged at its sloped portion. The second electrode 506 interacts with a first electrode 504 which is interconnected to the periphery of the membrane 503. The second electrode 506 is electrically connected to external electronics by means of a conductor 509 integrated into the shaper element 505. Again, by applying a voltage V>0 the electrodes 504 and 506 attract and the periphery of the membrane 503 is lifted causing the interior of the membrane 503 to lower. Fig. 5b) shows the diaphragm in a state where the membrane 503 does not yet touch the support 501 such that the diaphragm still does not allow light to pass. For making the membrane 503 touch the support 501 the voltage between the electrodes 504 and 506 may be further increased. In contrast to the embodiment of Figure 1, the arrangement of the second electrode 506 has changed by being integrated into the shaper element 505. Such arrangement causes a different actuation direction with respect to the first electrode 504.

Overall, the light transmission path of the optical diaphragm does not interfere with actuator elements. Instead, the actuator acts on the periphery of the membrane and may be electrically or manually controlled. The deformation of the deformable membrane may depend on a distribution of the elastic modulus, a local distribution of the membrane thickness, a shape of the membrane shaper - if available - as well as the membrane deformation mechanism, if no membrane shaper is used. The shape of the support as well as of the deformable membrane and the electrodes can be adapted to various applications. In particular, the electrodes, the membrane, the shaper as well as the optical element as such can be of any suitable shape and e.g. be triangular, rectangular, circular or polygonial. The first and second electrodes can also have annulus shape.

The tunable diaphragm can be used in a large variety of applications, such as:
- Projection devices, e.g. for applications in the optical part of projectors for macro- and micro-projectors in beamers and hand-held devices;
- Displays; Microscopes;
- Cameras; Surveillance cameras;
- Vision systems, having any kind of camera;
- In research applications;
- Lighting applications such as illumination for shops, retail, museums or home applications;
- Telecommunication applications (amplitude modulation).

While there are shown and described presently preferred embodiments of the invention, it is to be distinctly understood that the invention is not limited thereto but may be otherwise variously embodied and practiced within the scope of the following claims.

## Claims

1. An adjustable optical diaphragm, comprising
- a membrane (103, 203, 303, 403, 503) with an interior (1031, 4031) and a periphery (1032, 4032),
- a support (101, 201, 301, 401, 410, 501) for the membrane,
- a fluid (102, 202, 302, 402, 503) between the membrane and the support, and
- an actuator for deforming the membrane, **characterized in that** the actuator is arranged such that it solely engages with the periphery of the membrane for bringing the interior of the membrane in and out of contact with the support.

2. The optical diaphragm of claim 1, wherein the actuator comprises means for moving the periphery of the membrane towards and/or away from the support, wherein moving the periphery away from the support effects a moving of the interior towards the support, and wherein moving the periphery towards the support effects a moving of the interior away from the support.

3. The optical diaphragm of claim 2, wherein the means for moving the periphery of the membrane is one or more of electrical and mechanical means, including one or more of a piezo actuator, a piezo motor, an electrostatic zipper actuator, a stepper motor, a screw drive motor, an electroactive polymer actuator, an electrostatic actuator including comb drives or other MEMS actuators, and an electromagentic actuator comprising at least one of the following components: a magnet, a coil, magnetically soft material.

4. The optical diaphragm of one of the preceding claims, wherein the actuator is interconnected directly and/or via a mechanical linkage structure to the periphery of the membrane.

5. The optical diaphragm of one of the preceding claims, wherein the membrane is pre-stretched.

6. The optical diaphragm of any one of the preceding claims, wherein the interior and the periphery of the membrane are two separate pieces.

7. The optical diaphragm of claim 6, wherein the interior (4031) is arranged to cover an opening of a first piece (401) of the support, and wherein the periphery (4032) is arranged between the first piece (401) of the support and a second piece (410) of the support.

8. The optical diaphragm of any of the preceding claims, wherein a sealed container built from the support and the membrane comprises a constant amount of the fluid, and wherein the amount of the fluid is dimensioned such that the interior of the membrane does not touch or only partially touches the support when the periphery is actuated to a position closest to the support.

9. The optical diaphragm of any of the preceding elements, comprising a shaper element (305, 505) defining a shape of the interior of the membrane.

10. The optical diaphragm of any of the preceding claims, wherein the actuator comprises a rigid element (204, 304) attached to the periphery of the membrane, and means for moving the rigid element.

11. The optical diaphragm of any of the preceding claims, wherein a first electrode (104, 504) of the actuator is interconnected to the periphery of the membrane, and wherein a second electrode (106, 504) is arranged above the membrane and electrically insulated from the first electrode (104, 504) through an insulation layer (105, 507) for interacting with the first electrode (104, 504).

12. The optical diaphragm of claim 11, comprising a frame structure (107) arranged above the membrane, the frame structure comprising an optically transparent central opening for exposing the interior of the membrane to light (108), and a sloped portion including at least a part of the second electrode facing at least a part of the first electrode.

13. The optical diaphragm of any of the preceding claims, comprising at least one of the following material properties:
- the fluid being substantially opaque;
- the fluid showing at least one of an absorbing and scattering property for at least one wavelength;
- the membrane being transparent and elastic;
- at least a portion of the support being transparent.

14. A method for operating an optical diaphragm, the diaphragm comprising a membrane (103, 203, 303, 403, 503) with an interior (1031, 4031) and a periphery (1032, 4032), a support (101, 201, 301, 401, 410, 501) for the membrane, and a fluid (102, 202, 302, 402, 502) between the membrane and the support, the method comprising:
- moving the periphery of the membrane away from the support for effecting a moving of the interior of the membrane towards the support, and
- moving the periphery of the membrane towards the support for effecting a moving of the interior of the membrane away from the support.

15. A method for fabricating an adjustable optical diaphragm, comprising
- filling a fluid (102, 202, 302, 402, 502) into a support (101, 201, 301, 401, 410, 501),
- attaching a membrane (103, 203, 303, 403, 503) with an interior (1031, 4031) and a periphery (1032, 4032) to the support, and
- providing an actuator, and
- engaging the actuator solely with the periphery of the membrane for deforming the membrane.

16. The method of claim 15, comprising
- a membrane,
- applying a first ring-shaped electrode to the periphery of the membrane,
- providing a ring-shaped frame structure above the membrane, the frame structure comprising a second electrode and an electrical insulation layer facing the first electrode, and
- fixing the frame structure to the support.
